# EUROPEAN PATENT APPLICATION

(11) **EP 4 588 857 A1**
(43) Date of publication of application: **23.07.2025**
(21) Application number: 24153035.1
(22) Date of filing: 22.01.2024
(51) Int. Cl.: B65G 1/06, B61B 13/00, B65G 1/04

(54) **AN AUTOMATED STORAGE AND RETRIEVAL SYSTEM**

(71) Applicant: AUTOSTORE TECHNOLOGY AS, 5578 Nedre Vats (NO)
(72) Inventor: Pløen, Christian, 5578 Nedre Vats (NO)
(74) Representative: Kilburn & Strode LLP

(57) **Abstract**

The disclosure relates to an automated storage and retrieval system for storage containers, the system comprising a rail system and a vehicle; the rail system comprising a first set of parallel rails in a first direction and a second set of parallel rails in a second direction perpendicular to the first direction, each rail in the first direction having an inner and outer parallel track relative to the vehicle. The vehicle comprises: a vehicle body; and a first and a second pair of wheels for moving the vehicle in the first direction on the rail system, each of the first and the second pair of wheels comprising two wheels arranged on opposite sides of the vehicle body; wherein the wheels of at least one of the first pair and the second pair of wheels are each positioned in an outer track.

## Description

The disclosure relates to an automated storage and retrieval system for storage containers. More particularly, it relates to an automated storage and retrieval system for storage containers, and to a vehicle for the automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles, or robots, have wheels for moving the robots in the X direction and the Y direction along the rails in the rail system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a top view of a double-double rail system;
Fig. 5B shows a top view of a single-double rail system;
Fig. 6A shows a perspective view of wheels of a robotic container-handling vehicle on a rail system;
Fig. 6B shows a top view of the robotic container-handling vehicle of Fig. 6A;
Fig. 7 shows a top view of wheels of a robotic container-handing vehicle on a double-double rail system;
Fig. 8 shows a top view of wheels of a robotic container-handing vehicle on a single-double rail system;
Fig. 9 shows a top view of wheels of a robotic container-handing vehicle on a double-double rail system;
Fig. 10 shows a top view of wheels of a robotic container-handing vehicle of the present disclosure on a double-double rail system;
Fig. 11 shows a perspective view of a service vehicle.

### DETAILED DESCRIPTION

In overview, the disclosure relates to a vehicle, such as a robotic container-handling vehicle or a service vehicle, which is positioned on or positionable on a rail system in an automated storage and retrieval system. The rail system has a first set of parallel rails aligned in a first direction, the X direction, and second set of parallel rails aligned in a second direction perpendicular to the first direction, the Y direction. The vehicle moves on the rails in in the X-Y plane. The vehicle moves along the rails using wheels.

The rails each have one track or two tracks, and the wheels are positioned (or positionable) in or on a track. Where the rails have two tracks, prior art vehicles have wheels which are positioned on the track which is closest to the vehicle body (the inner track).

The present inventors have realised that the outer track can be used to position the wheels. This unlocks numerous possibilities for wheel layout design. By positioning wheels in the outer track, rather than the inner track, the stability of the vehicle can be improved. The wheel layout of a vehicle can be specifically designed or chosen to provide the desired stability profile for that vehicles purpose. This unlocks design freedom to choose when designing a vehicle for the wheels to be position in either the inner or outer track, the designer is not limited to wheels being positioned in the inner track. That is, a vehicle can be designed to have wheels in the inner track or the outer track according to the requirements of that vehicle.

### Automated storage and retrieval system overview

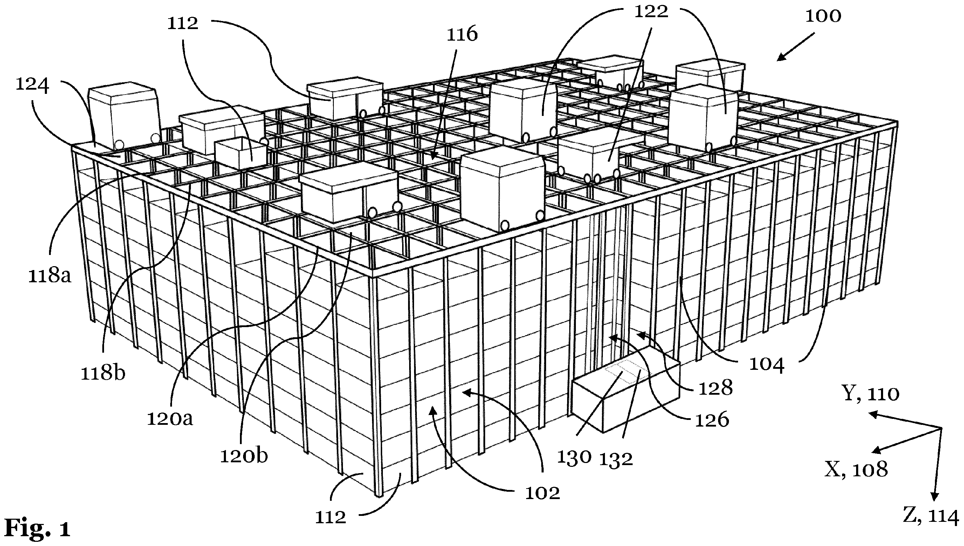

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

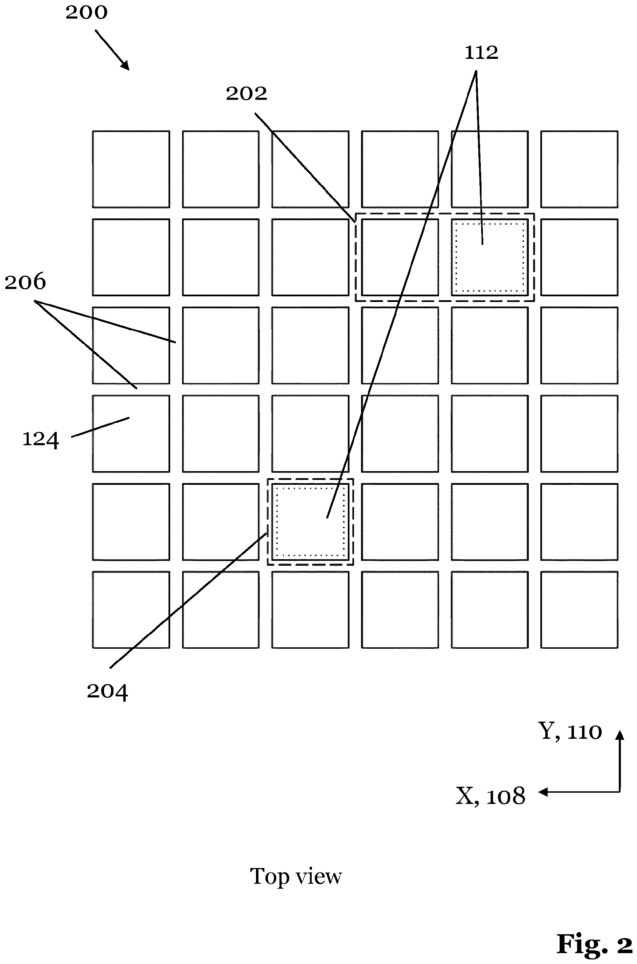

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

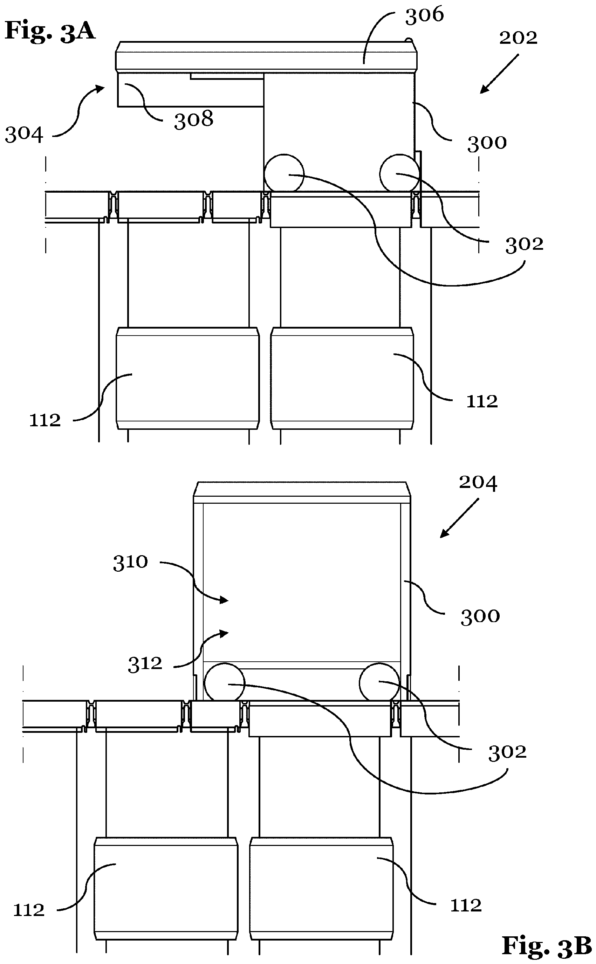

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

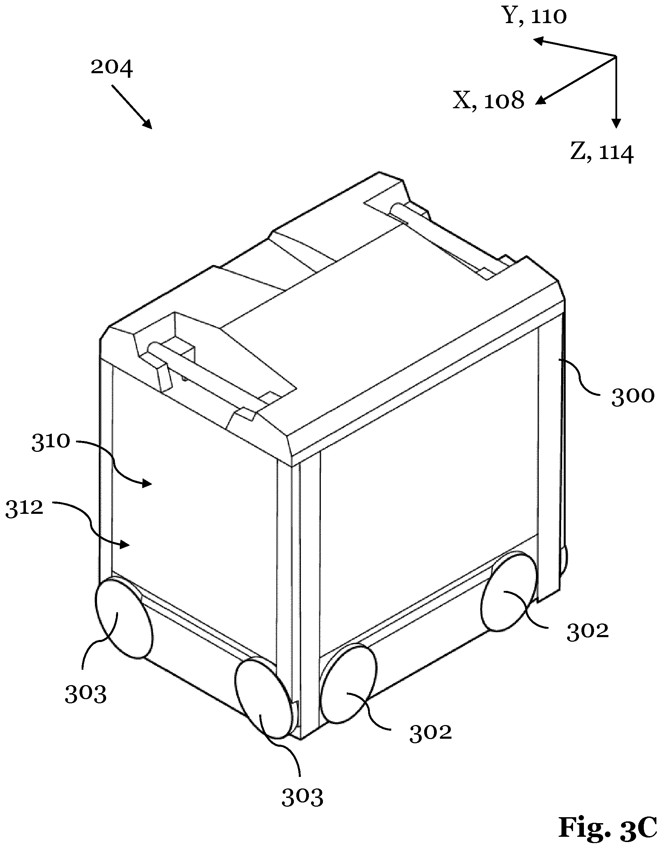

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

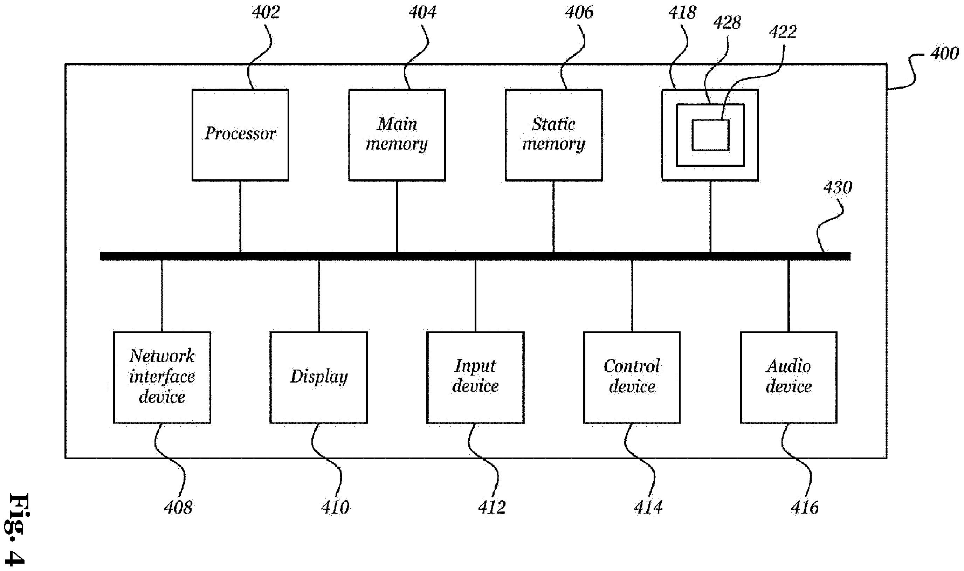

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

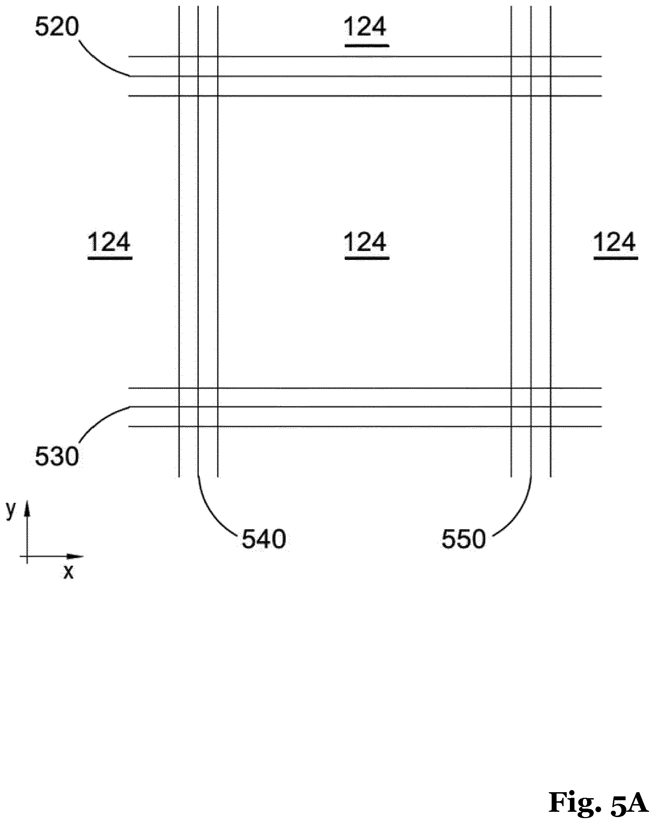

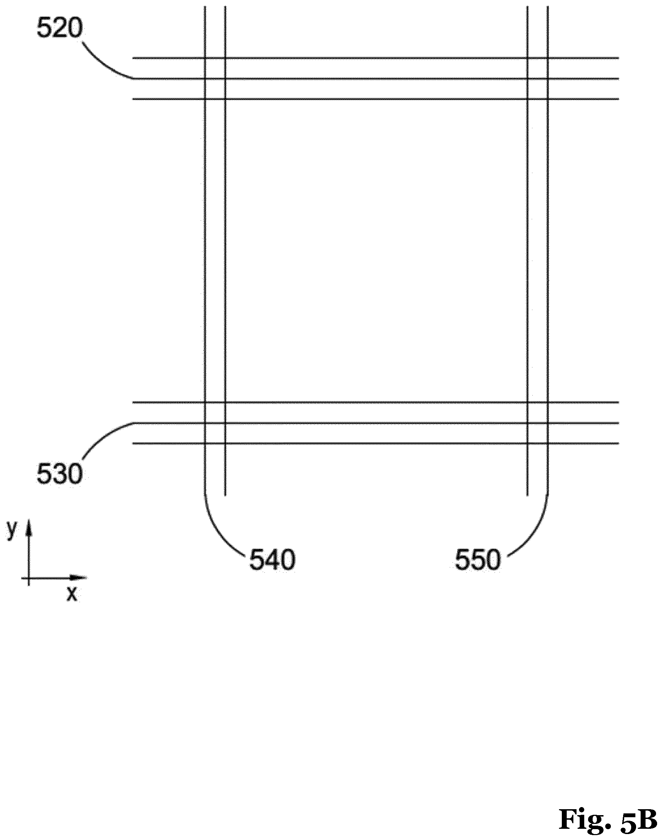

Fig. 5a and Fig 5b. each show a rail system of an automated storage and retrieval system from above. The rails form the grid 100 and define vertical column access openings 124 for access to bins, which are stackable within the vertical columns. Two different types of rail system are shown in Fig. 5a and Fig 5b. A first set of parallel rails guide movement of the vehicles in a first direction across the top of the grid structure, and a second set of parallel rails, arranged perpendicular to the first set, guide movement of the vehicles in a second direction, perpendicular to the first direction. In this way, the grid of rails allows movement of the vehicles in two dimensions in the X-Y plane, so that a vehicle can be moved into any desired column access opening in the grid.

The rails may include grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

A rail with two tracks facilitates two vehicles passing each other on the same rail, if each wheel is in the track closest to the vehicle. Each rail with two tracks is capable of accommodating two wheels in parallel, one wheel in each adjacent track.

The rail systems in Fig. 5a and Fig. 5b include a first set of rails 520, 530 aligned in a first direction X to guide movement of the vehicles in the first direction X, and a second set of rails 540, 550 aligned in a second direction Y to guide movement of the vehicles in the second direction Y. The first set of rails is perpendicular to the second set of rails. The first set of rails will be referred to the rails in the X direction or X rails, and the second set of rails will be referred to as the rails in the Y direction or Y rails. Throughout the description, the X direction and the Y direction are terms used to refer to a first direction, and a second direction perpendicular to the second direction.

In the rail system of Fig. 5a, each rail in the X direction, 520 and 530, and each rail in the Y direction, 540 and 550, comprises two parallel tracks. This is known as a double-double rail system.

In the rail system of Fig 5b, each rail in the X direction, 520 and 530, comprises two parallel tracks, and each rail in the Y direction, 540 and 550, comprises a single track. This is known as a single-double rail system.

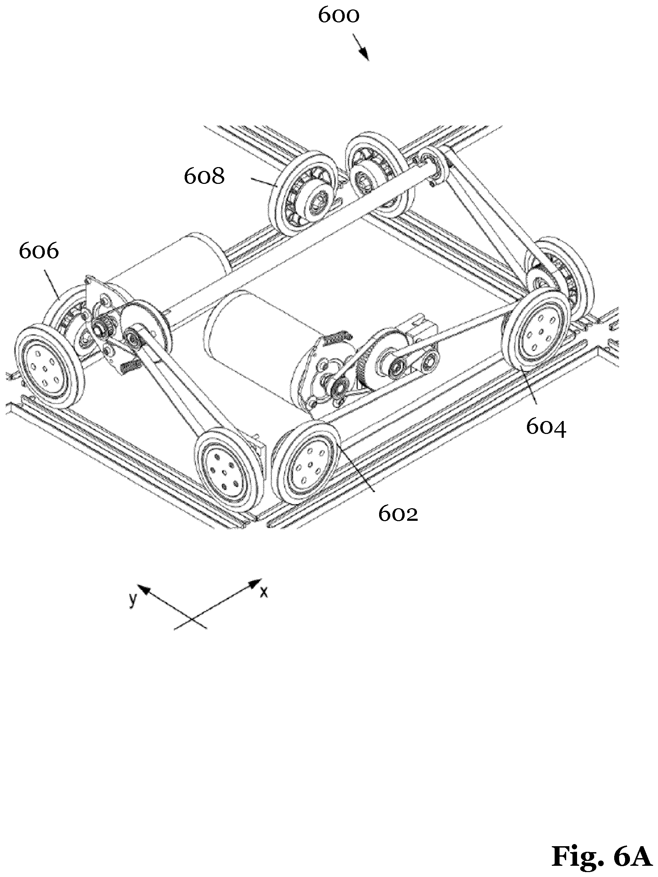

Fig. 6a shows the wheel arrangement of a vehicle 600 on a double-double rail system. The vehicle has eight wheels. The vehicle has a front side, a back side, a left side and a right side, and is configured to travel in the X direction and the Y direction. The vehicle includes four wheels for moving the vehicle in the X direction, 602, 604, 606, 608, two wheels on opposing sides of the vehicle, and four wheels for moving the vehicle in the Y direction, two wheels on each opposing side.

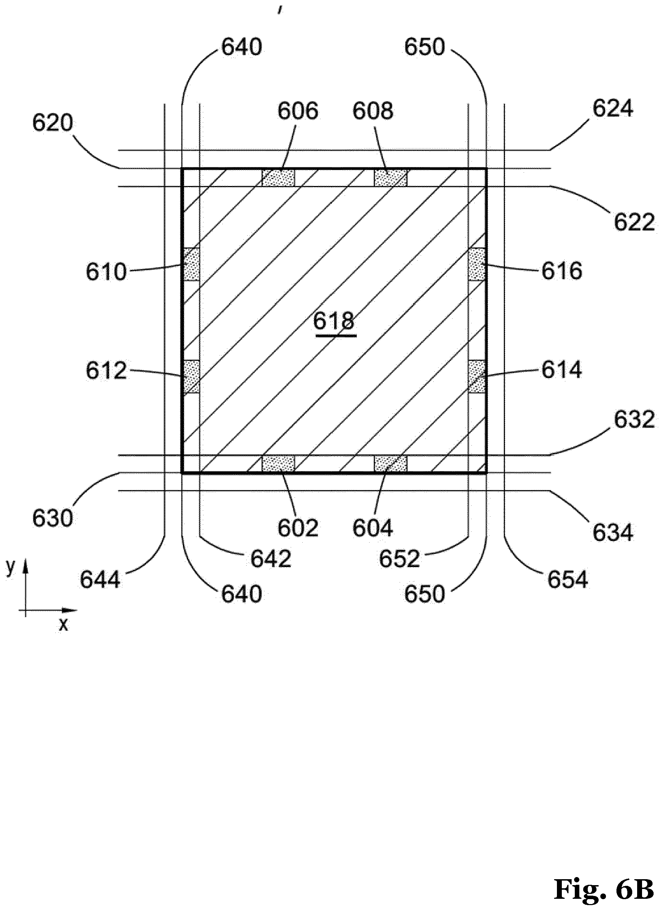

Fig. 6b shows the vehicle from above. The footprint of the vehicle body is shown in hash lines as 618. The rails in the X direction, 620 and 630, each have two tracks. The rails each have an inner track positioned closest to the vehicle, 622 and 632, and an outer track positioned further from the vehicle, 624 and 634. The rails in the Y direction, 640 and 650, each have two tracks. The rails each have an inner track positioned closest to the vehicle, 642 and 652, and an outer track positioned further from the vehicle, 644 and 654.

The vehicle body 618 is indicated to be square and sized to be positioned over a single column access opening. In other embodiments, the vehicle body is smaller than a column access opening, or larger than a column access opening, or in the case of a cantilever robot is positioned over two column access openings. In other embodiments the vehicle body is not square, for example the vehicle body is rectangular.

The vehicle may be a cantilever vehicle which is positioned over two vertical column access openings 124, the main body being positioned over a first opening, and a cantilever arm being positioned over a second column access opening, where the vehicle is configured to lift containers from the second column.

In prior art vehicles such as that illustrated in Fig. 6a and Fig. 6b, it is known to position the wheels of the vehicle, 602, 604, 606, 608, 610, 612, 614 and 616 in the inner tracks of the rail system. As can be seen, two vehicles could pass one another on the same rail, with each vehicle having the wheels positioned on the inner track (relative to the respective vehicle). The vehicle has four wheels for moving the vehicle in the X direction, two on the lower side of the figure 602 and 604, two on the upper side of the figure 606 and 608. These wheels also form pairs of wheels on opposing sides, 602 and 606 form a pair towards one end of the vehicle, and 604 and 608 form a pair towards the opposite end of the vehicle. The vehicle has four wheels for moving the vehicle in the Y direction, two on the right side as shown in the figure, 614 and 616, and tow on the left side of the figure 612 and 610. These form two pairs of wheels on opposing sides, 610 and 616, and 612 and 614.

Wheels diagonally opposed to one another on opposing sides could also be considered to form pairs of opposing wheels.

In the prior art, each of the wheels is positioned on an inner track.

The inventors of the present disclosure have realised that wheels can be positioned in the outer track. This can provide benefits, such as improved balance and stability. It also means that different wheel arrangements can be provided for the same design of vehicle body, meaning vehicles with different balance and stability profiles can be provided using the same vehicle body design. Having wheels positioned in outer tracks created a wider base over which the weight of the vehicle is supported. By realising that any of the wheels can be positioned in the outer tracks, this opens up design freedoms for designers of the vehicle to position wheels in the track which best serves the vehicle requirements.

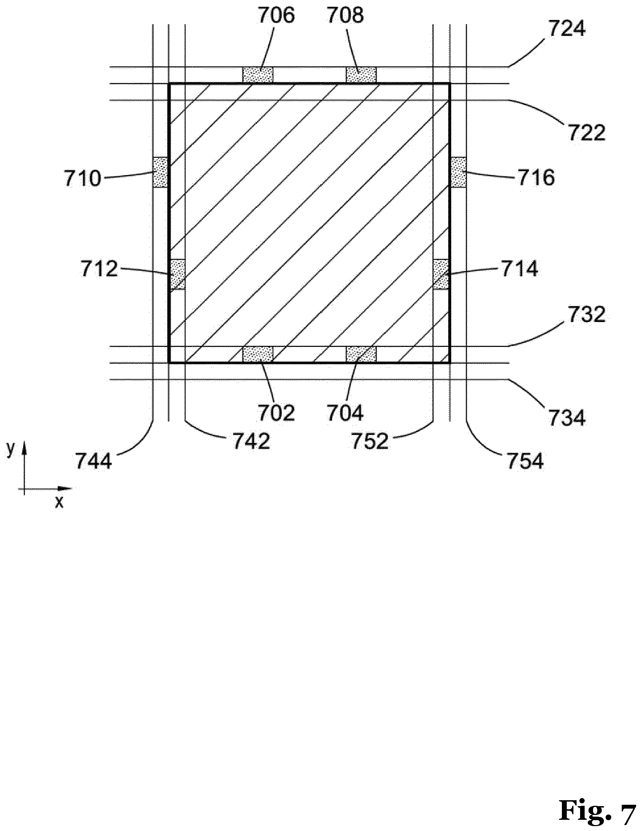

Fig. 7 shows an embodiment of a vehicle of the present disclosure. Two wheels for moving the vehicle in the Y direction, 710 and 716, located on opposing sides of the vehicle body, are each positioned in outer tracks, 744 and 754 respectively. The two wheels are located towards the rear side of the vehicle. Two wheels for moving the vehicle in the X direction, 706 and 708, located on the same side of the vehicle as each other, the rear side, are each positioned in the outer track 724.

The wheels for moving the vehicle in the Y direction located towards the front side of the vehicle, 712 and 714, and the wheels for moving the vehicle in the X direction located on the front side of the vehicle, 702 and 704, are each positioned in an inner track.

The vehicle in Fig. 7 has a wider base at the rear side of the vehicle, which improves stability. For example such a vehicle could be useful for transporting a load which is heavier at the rear end of the vehicle. The front end of the vehicle has both wheels in the inner track, and therefore the vehicle is able to pass other vehicles on the same track at the front end. Front and back are used as relative terms to describe opposing sides of the vehicle.

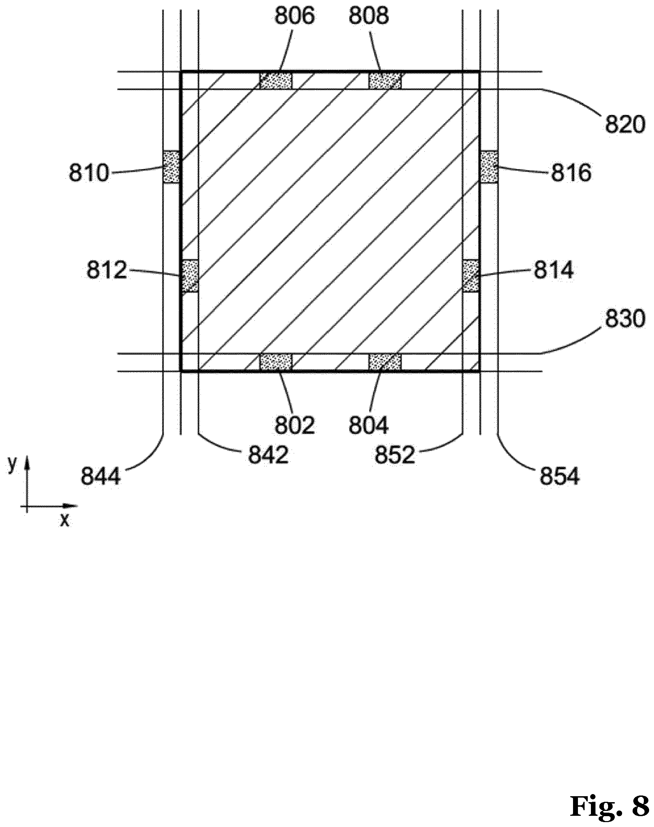

Fig. 8 shows a further embodiment of a vehicle of the present disclosure. The vehicle is on single-double rail system. Two wheels for moving the vehicle in the Y direction, 810 and 816, located on opposing sides of the vehicle body, are each positioned in outer tracks, 844 and 854 respectively. The other two wheels for moving the vehicle in the Y direction, 812 and 814 are located in inner tracks , 852 and 842 respectively.

The rails in the X direction, 830 and 820, have a single track. The wheels for moving the vehicle in the X direction on the front side, 802, 804, are positioned in the track on rail 820, and the wheels positioned on the rear side, 806 and 808, are positioned in the track on rail 830.

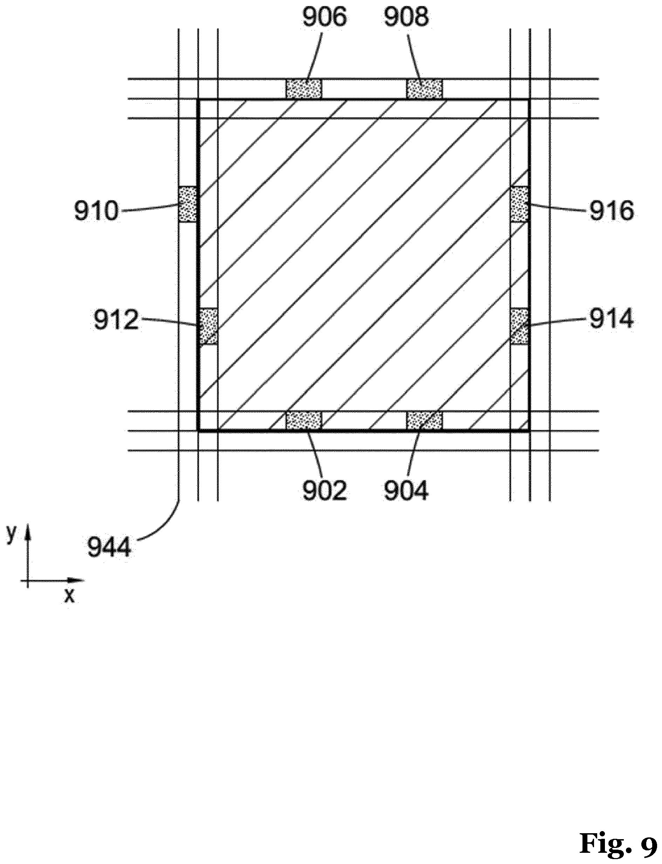

It will be appreciated that other configurations with one or more wheels in the outer tracks can be provided. The disclosure includes all wheel layouts, where each wheel is placed in either the inner our outer tracks. In one example, a single wheel 910 of the vehicle is positioned in an outer track 942, and the remaining wheels, 902, 904, 906, 908, 912, 916 and 914 are each positioned in an inner track. This is shown in Fig 9.

In other examples, at least one wheel for moving the vehicle in the X direction, and at least one wheel for moving the vehicle in the Y direction, are positioned in an outer tracks. In an example not illustrated in the figures, a single wheel for moving the vehicle in the X direction and a single wheel for moving the vehicle in the Y direction is each positioned in an outer track, with the remaining wheels each being positioned in an inner track.

In another example, not shown in the figures, all four wheels for moving the vehicle in the X direction are positioned in the outer tracks, whilst all four wheels for moving the vehicle in the Y direction are positioned in the inner tracks. In another example, all four wheels for moving the vehicle in the X direction are positioned in the outer tracks, whilst at least one wheel for moving the vehicle in the Y direction is positioned in the inner tracks. In another example, in a vehicle positioned on a single-double rail system, all four wheels positioned on a double rail are positioned in an outer track.

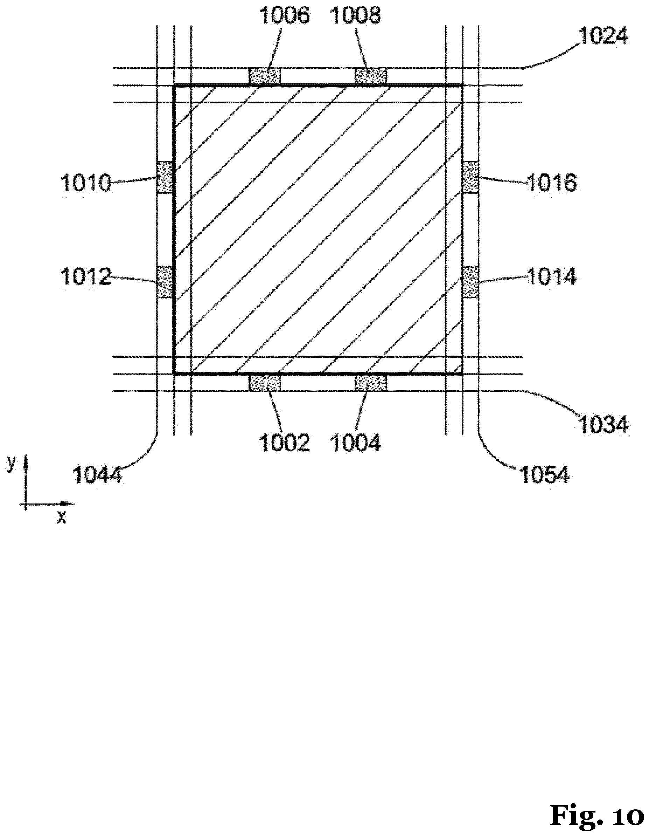

Fig. 10 shows an embodiment of a vehicle of the present disclosure. All of the wheels of the vehicle are positioned in outer tracks. All four wheels for moving the vehicle in the X direction are positioned in the outer tracks: 1002 and 1004 are positioned in track 1034, and 1006 and 1008 are positioned in track 1024. All four wheels for moving the vehicle in the Y direction are positioned in the outer tracks: 1010 and 1012 are positioned in track 1044, and 1014 and 1016 are positioned in track 1034.

Having all of the wheels positioned in outer tracks created a wider base over which the weight of the vehicle is supported. This is useful for providing stability to the vehicle. This can be beneficial for, for example, transporting heavy loads across the grid.

In some examples, the vehicles illustrated in Figures 6 to 10 are robotic container-handling vehicles, configured to move and relocate containers between vertical columns around the grid.

Alternatively, in other examples, the vehicles are service vehicles which have connection means for connecting to a container handling vehicle located on the rail system. Service vehicles can be used to access container handling vehicles on the grid. For example, if a container handling vehicle has malfunctioned whilst on the grid and is unable to return to a position on the grid in which is can be repaired or removed, a service vehicle can be used. To retrieve a broken or malfunctioning container handling vehicle from the grid, the service vehicle moves to the container handling vehicle, attaches to the container handling vehicle, and moves to the repair location. The service vehicle pushes, pulls, or guides the container handling vehicle with it to the repair location. In some examples the service vehicle is configured to connect to a container handling vehicle having all wheels positioned in the inner tracks of the rail system.

The footprint of a vehicle can be smaller than, the same size as, or larger than a column access opening.

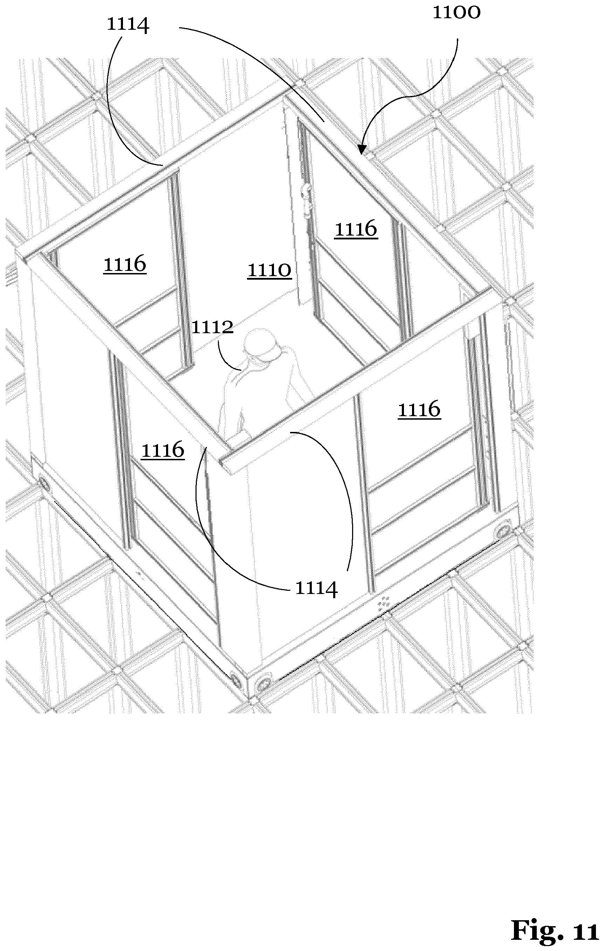

One example where additional stability may be desirable is a service vehicle 1102 such as that shown in Fig. 11. The service vehicle comprises an enclosed area 1110 for accommodating an operator 1112. The enclosed area 1110 is separated from the rest of the grid by walls 1114. This means the operator 1112 is separated from and unable to access the area where the plurality of container handling vehicles operate. This ensures the safety of the operator. The walls 1114 have openable access points 1116, which allows an operator to access the exterior of the service vehicle if necessary, for example to access container handling vehicles or debris on the grid. The access points 1116 are closed by default and when the service vehicle is moving.

In the example in Fig. 11 the eight wheels of the service vehicle are all positioned in an outer track of the rail system. The base of the service vehicle is therefore wide for stability.

A number of specific embodiments of wheel layouts are shown in the figures. However, it will be appreciated that the disclosure is not limited to specific embodiments illustrated in the figures. The inventors have realised that there is the flexibility to use the outer track for any one, any subset, or all of the wheels on the vehicle. Therefore a vehicle wheel plan is designed where each wheel is positioned in one of the inner or the outer tracks.

For example, the disclosure covers an embodiment where a single wheel of the vehicle wheels is positioned in an inner track, and the remaining wheels are all each positioned in an outer track. In another embodiment a single wheel of the vehicle is positioned in an outer track, and the remaining wheels are all each positioned in an inner track.

In an embodiment at least one wheel in the X direction is positioned in an outer track, and at least one wheel in the Y direction is positioned in an outer track. In an embodiment, a pair of wheels on opposing sides in the X direction are each positioned in an outer track, and the remaining two wheels are each positioned in an inner track. The pair of wheels on opposing sides in the outer tracks could be positioned towards the same end of the vehicle, for example both could be positioned towards the front of he vehicle. Alternatively, the pair of wheels in the outer tracks could be located diagonally opposite form one another.

The examples in the figures all show eight wheels on the vehicle in total. However, a different number of wheels could be included. For example, additional
Throughout this disclosure, where there is reference to an automated storage and retrieval system for storage containers, the system comprising a rail system and a vehicle, the disclosure also covers the vehicle in isolation. That is, where an automated storage and retrieval system for storage containers, the system comprising a rail system and a vehicle is disclosed, there is also disclosure a vehicle having the features of the vehicle disclosed in the system.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system for storage containers, the system comprising a rail system and a vehicle;
the rail system comprising a first set of parallel rails in a first direction and a second set of parallel rails in a second direction perpendicular to the first direction, each rail in the first direction having an inner and outer parallel track relative to the vehicle;
the vehicle comprising:
a vehicle body; and
a first and a second pair of wheels for moving the vehicle in the first direction on the rail system, each of the first and the second pair of wheels comprising two wheels arranged on opposite sides of the vehicle body;
wherein the wheels of at least one of the first pair of wheels and the second pair of wheels is each positioned in an outer track.

2. The automated storage and retrieval system according to claim 1, wherein the wheels of both the first pair and the second pair of wheels are positioned in outer tracks.

3. The automated storage and retrieval system according to claim 1 or claim 2, wherein the first pair of wheels is located towards a front end of the vehicle the second pair of wheels is located towards a rear end of the vehicle.

4. The automated storage system of any preceding claim, further comprising a third and fourth pair of wheels for moving the vehicle in the second direction on the rail system, each of the third and the fourth pair of wheels comprising two wheels arranged on opposite sides of the vehicle body.

5. The automated storage and retrieval system according to claim 4, wherein each rail in the second direction comprises an inner and outer track relative to the vehicle.

6. The automated storage and retrieval system according to claim 5, wherein the wheels of at least one of the third pair and the fourth pair of wheels are each positioned in an outer track.

7. The automated storage system according to claim 5, wherein the first pair of wheels is located towards a front end of the vehicle and each wheel is positioned in an outer track, and the second pair of wheels is located towards the rear end of the vehicle and each wheel is positioned in an inner track; and
wherein two wheels for moving the vehicle in the second direction located at the front end of the vehicle are positioned in an outer track.

8. The automated storage and retrieval system according to claim 5, wherein each wheel of the first pair, the second pair, the third and the fourth pair of wheels is positioned in an outer track.

9. The automated storage and retrieval system according to any preceding claim, wherein the vehicle is a container handling vehicle.

10. The automated storage and retrieval system according to claim 9, wherein the container handling vehicle comprises a cantilever.

11. The automated storage and retrieval system of any of claims 1 to 8, wherein the vehicle comprises a service vehicle for connecting to a container handling vehicle located on the rail system.

12. The automated storage and retrieval system according to any of claims 1 to 8, wherein the vehicle comprises an enclosed area for accommodating an operator, wherein the enclosed area is separated from an area where the plurality of container handling vehicles operate.

13. A vehicle for the automated storage and retrieval system according to any preceding claim, wherein the vehicle comprises a vehicle body and first and a second pair of wheels for moving the vehicle in the first direction on the rail system, each of the first and the second pair of wheels comprising two wheels arranged on opposite sides of the vehicle body; wherein the wheels of at least one of the first pair and the second pair of wheels are located to be positioned in an outer track of the rail system.

14. An automated storage and retrieval system for storage containers, the system comprising a rail system and a vehicle;
the rail system comprising a first set of parallel rails in a first direction and a second set of parallel rails in a second direction perpendicular to the first direction, each rail having an inner and outer parallel track relative to the vehicle;
the vehicle comprising:
a vehicle body;
a first and a second pair of wheels for moving the vehicle in the first direction on the rail system; and
a third and fourth pair of wheels for moving the vehicle in the second direction on the rail system;
wherein at least one wheel for moving the service vehicle in the first direction and at least one wheel for moving the vehicle in the second direction is positioned in an outer track.

15. An automated storage and retrieval system for storage containers, the system comprising a rail system and a vehicle;
the rail system comprising a first set of parallel rails in a first direction and a second set of parallel rails in a second direction perpendicular to the first direction, each rail in the first direction having an inner and outer parallel track relative to the vehicle; and
the vehicle comprising:
a vehicle body;
a set of wheels for moving the vehicle in the first direction on the rail system, wherein a single wheel of the wheels for moving the vehicle in the first direction is positioned in the outer tracks, and the remining wheels for moving the vehicle in the first direction are positioned in the inner tracks.
